# EUROPÄISCHE PATENTSCHRIFT

(11) **EP 3 714 023 B1**
(45) Veröffentlichungstag und Bekanntmachung des Hinweises auf die Patenterteilung: **09.03.2022**
(21) Anmeldenummer: 18807330.8
(22) Anmeldetag: 23.11.2018
(51) Int. Cl.: C10G 7/00, C07C 7/04, C07C 15/44, C10G 9/36

(54) **VERFAHREN UND ANLAGE ZUR GEWINNUNG POLYMERISIERBARER AROMATISCHER VERBINDUNGEN**
METHOD AND ASSEMBLY FOR POLYMERISABLE AROMATIC COMPOUNDS
PROCÉDÉ ET INSTALLATION PERMETTANT D'OBTENIR DES COMPOSÉS AROMATIQUES POLYMÉRISABLES

(30) Priorität: 23.11.2017 EP 17203410
(43) Veröffentlichungstag der Anmeldung: 30.09.2020
(73) Patentinhaber: Linde GmbH, 82049 Pullach (DE)
(72) Erfinder: BRUDER, David, 82379 München (DE); FRITZ, Helmut, 81375 München (DE)
(74) Vertreter: Reuß, Stephanie
(86) Internationale Anmeldenummer: PCT/EP2018/082430
(87) Internationale Veröffentlichungsnummer: WO 2019/101957

(56) Entgegenhaltungen:
- EP-A1- 0 602 302
- US-A1- 2008 249 341
- US-A1- 2012 048 714
- Heinz Zimmermann ET AL: "Ethylene" In: "Ullmann's Encyclopedia of Industrial Chemistry", 15. April 2009 (2009-04-15), Wiley-VCH Verlag, Weinheim, XP055007506, ISBN: 978-3-52-730673-2 DOI: 10.1002/14356007.a10_045.pub3, in der Anmeldung erwähnt Abbildungen 33-36

## Beschreibung

Die Erfindung betrifft ein eine Anlage zur Gewinnung polymerisierbarer aromatischer Verbindungen mit neun Kohlenstoffatomen und eine entsprechende Anlage gemäß den Oberbegriffen der unabhängigen Patentansprüche.

### Stand der Technik

Verfahren und Anlagen zum Dampfspalten von Kohlenwasserstoffen sind beispielsweise im Artikel "Ethylene" in Ullmann's Encyclopedia of Industrial Chemistry, Onlineausgabe, 15. April 2009, DOI: 10.1002/14356007.a10_045.pub2, beschrieben. Das Dampfspalten (engl. Steam Cracking) wird vorwiegend zur Gewinnung von kurzkettigen Olefinen wie Ethylen und Propylen, Diolefinen wie Butadien oder von Aromaten eingesetzt, ist jedoch nicht hierauf beschränkt.

In entsprechenden Verfahren und Anlagen werden den verwendeten Spaltöfen Komponentengemische entnommen, die geeigneten Aufbereitungssequenzen unterworfen werden. Hierbei erfolgt in einem ersten Abschnitt (engl. Front-End Section) zunächst eine Entfernung schwerer Verbindungen, falls vorhanden, sowie danach insbesondere eine sogenannte Rohgasverdichtung und eine Sauergasentfernung. Nach der Aufbereitung in dem ersten Abschnitt erfolgt eine Fraktionierung, in der durch thermische Trennverfahren unterschiedliche Kohlenwasserstofffraktionen gebildet werden. Zu Details sei auf den erwähnten Artikel "Ethylene" in Ullmann's Encyclopedia of Industrial Chemistry, insbesondere Abschnitt 5.3.2.1, "Front-End Section", und Abschnitt 5.3.2.2, "Hydrocarbon Fractionation Section", verwiesen.

Schwere Verbindungen fallen in dem erwähnten ersten Abschnitt insbesondere in Form einer oder mehrerer sogenannter Pyrolyseölfraktionen (engl. Pyrolysis Oil) und einer sogenannten (schweren) Pyrolysebenzinfraktion (engl. Pyrolysis Gasoline) an. Die schwere Pyrolysebenzinfraktion kann insbesondere in einer Wasserwäsche gebildet werden, die Teil des ersten Abschnitts ist. Schwere Verbindungen werden insbesondere dann gebildet, wenn zumindest teilweise schwerere (flüssige) Kohlenwasserstoffeinsätze wie Naphtha eingesetzt werden, hingegen nicht oder zumindest in geringerem Umfang bei der Verwendung von überwiegend oder ausschließlich leichten (gasförmigen) Einsätzen.

Die Pyrolyseölfraktion(en) wird bzw. werden in dem ersten Abschnitt der Aufbereitungssequenz in einer Primärfraktionierung (engl. Primary Fractionation) abgetrennt, die Pyrolysebenzinfraktion überwiegend in einer der Primärfraktionierung nachgeschalteten Wasserquenchsäule (engl. Water-Quench Column) oder anderen Einrichtungen. In der Primärfraktionierung werden typischerweise zirkulierendes Öl und ein Teil der Pyrolysebenzinfraktion eingesetzt.

Ein Überschuss der Pyrolysebenzinfraktion kann, insbesondere nach Abstrippen noch enthaltener leichter Verbindungen, anderweitig verwendet werden. Beispielsweise kann eine Extraktion aromatischer Verbindungen und eine weitere Fraktionierung und Aufbereitung zu Kraftstoff erfolgen. Auch in nachgeschalteten Schritten des ersten Abschnitts, insbesondere der Rohgasverdichtung, und in der anschließenden Trennung, beispielsweise in einem Debutanizer kann noch (leichtes) Pyrolysebenzin abgeschieden und zur Bildung der Pyrolysebenzinfraktion verwendet werden. Wie nachfolgend erläutert, erfolgt dies im Rahmen der vorliegenden Erfindung jedoch nur begrenzt und vorzugsweise gar nicht.

Unter dem Begriff "Pyrolyseöl" wird hier eine Fraktion eines zumindest teilweise durch Dampfspalten gebildeten Komponentengemischs verstanden, die überwiegend oder ausschließlich, d.h. zu mindestens 75%, 80%, 90% oder 95%, Verbindungen mit einem Siedepunkt oberhalb von 200 °C enthält. Es können, wie erwähnt, auch mehrere Pyrolyseölfraktionen gebildet werden, insbesondere eine sogenannte Pyrolysegasöl- und eine Pyrolyseheizölfraktion (engl. Pyrolysis Gasoil, Pyrolysis Fuel Oil), die sich durch die Siedeunkte der enthaltenen Verbindungen unterscheiden. Die Pyrolysegasölfraktion ("leichtes Pyrolyseöl") und die Pyrolyseheizölfraktion ("schweres Pyrolyseöl") werden typischerweise an unterschiedlichen Positionen in einer sogenannten Ölsäule gewonnen, welche Teil des erwähnten ersten Abschnitts ist.

Wie erwähnt, kann Pyrolysebenzin an unterschiedlichen Positionen in der Aufarbeitung gewonnen werden, der ein durch Dampfspalten erhaltenes Komponentengemisch unterworfen wird. Unter "schwerem Pyrolysebenzin" wird hier eine Fraktion eines zumindest teilweise durch Dampfspalten gebildeten Komponentengemischs verstanden, die überwiegend oder ausschließlich, d.h. zu mindestens 75%, 80%, 90% oder 95%, Verbindungen mit fünf bis zwölf oder fünf bis zehn Kohlenstoffatomen und einem Siedepunkt unterhalb von 200 °C enthält. Insb esondere enthält schweres Pyrolysebenzin beträchtliche Mengen an aromatischen Verbindungen. Aus dem schweren Pyrolysebenzin können weitere Pyrolysebenzinfraktionen gewonnen werden. Schweres Pyrolysebenzin kann, wie erwähnt, in einer Wassserwäsche erhalten werden, die Teil des ersten Abschnitts ist, wohingegen leichtes Pyrolysebenzin in nachfolgenden Schritten der Aufarbeitung, d.h. der Fraktionierung, insbesondere in einem Debutanizer, gebildet werden kann.

Beim Dampfspalten werden neben den primären Zielprodukten, insbesondere Ethylen, auch weitere wertvolle Verbindungen gebildet, die vorteilhafterweise einzeln oder gemeinsam, d.h. in Form entsprechender Fraktionen, gewonnen werden können. Während die US 2012/0048714 A1 sich auf energetische Verbesserungen bei der Gewinnung von Xylenen in dem sogenannten Aromatenkomplex einer Raffinerie bezieht und in der US 2008/0249341 A1 ein Verfahren zur Herstellung von hochenergetischem Kraftstoff offenbart ist, betrifft die vorliegende Erfindung die Gewinnung von polymerisierbaren aromatischen Verbindungen mit neun Kohlenstoffatomen, wie sie auch nachfolgend im Detail erläutert werden. EP 0 602 302 A1 offenbart ein weiteres Verfahren nach dem Stand der Technik.

Die vorliegende Erfindung stellt sich die Aufgabe, diese Gewinnung von polymerisierbaren aromatischen Verbindungen mit neun Kohlenstoffatomen aus einem zumindest teilweise durch Dampfspalten gebildeten Komponentengemisch zu verbessern.

### Offenbarung der Erfindung

Diese Aufgabe wird durch ein Verfahren zur Gewinnung polymerisierbarer aromatischer Verbindungen mit neun Kohlenstoffatomen und eine entsprechende Anlage mit den Merkmalen der unabhängigen Patentansprüche gelöst. Ausgestaltungen sind jeweils Gegenstand der abhängigen Patentansprüche und der nachfolgenden Beschreibung.

Vor der Erläuterung der Vorteile der vorliegenden Erfindung werden nachfolgend einige bei der Beschreibung der Erfindung verwendete Begriffe näher definiert. Komponentengemische können im hier verwendeten Sprachgebrauch reich oder arm an einer oder mehreren Komponenten sein, wobei der Begriff "reich" für einen Gehalt von wenigstens 75%, 80%, 90%, 95% oder 99% und der Begriff "arm" für einen Gehalt von höchstens 25%, 20%, 10%, 5% oder 1% auf molarer, Gewichts- oder Volumenbasis stehen kann. Komponentengemische können im hier verwendeten Sprachgebrauch ferner angereichert oder abgereichert an einer oder mehreren Komponenten sein, wobei sich diese Begriffe auf einen entsprechenden Gehalt in einem anderen Komponentengemisch beziehen, unter Verwendung dessen das betrachtete Komponentengemisch gebildet wurde. Das betrachtete Komponentengemisch ist "angereichert", wenn es zumindest den 1,5-fachen, 2-fachen, 5-fachen, 10-fachen, 100-fachen oder 1.000-fachen Gehalt der bezeichneten Komponente(n) aufweist, und "abgereichert", wenn es höchstens den 0,75-fachen, 0,5-fachen, 0,1-fachen, 0,01-fachen oder 0,001-fachen Gehalt der bezeichneten Komponente(n) aufweist. Ein "überwiegend" eine oder mehrere Komponenten enthaltendes Komponentengemisch ist insbesondere reich an dieser bzw. diesen Komponenten im soeben erläuterten Sinn.

Ist hier davon die Rede, dass ein Komponentengemisch unter Verwendung eines anderen Komponentengemischs "gebildet" wird, sei darunter verstanden, dass das betrachtete Komponentengemisch zumindest einige der in dem anderen Komponentengemisch enthaltene oder diesen gebildete Komponenten aufweist. Ein Bilden eines Komponentengemischs aus einem anderen kann beispielsweise ein Abzweigen eines Teils des Komponentengemischs, ein Zuspeisen einer oder mehrerer weiterer Komponenten oder Komponentengemische, ein chemisches oder physikalisches Umsetzen zumindest einiger Komponenten, sowie ein Erwärmen, Abkühlen, Verdampfen, Kondensieren usw. umfassen. Ein "Bilden" eines Komponentengemischs aus einem anderen Komponentengemisch kann aber auch lediglich die Bereitstellung des anderen Komponentengemischs in geeigneter Form, beispielsweise in einem Behälter oder einer Leitung, umfassen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei den hier in bar angegebenen Druckniveaus handelt es sich um Absolutdrücke.

Zur Auslegung und spezifischen Ausgestaltung von Säulen, Kolonnen und anderen Trennapparaten sowie deren Einbauten, wie sie auch im Rahmen der vorliegenden Anmeldung eingesetzt werden können, sei ausdrücklich auf einschlägige Fachliteratur verwiesen (siehe beispielsweise Sattler, K.: Thermische Trennverfahren: Grundlagen, Auslegung, Apparate, 3. Auflage 2001, Weinheim, Wiley-VCH). Insbesondere können entsprechende Trennapparate konventionelle Trennböden, insbesondere in Form strukturierter Bleche mit Ablaufeinrichtungen, oder geeignete Packungen aufweisen.

### Vorteile der Erfindung

Von großem ökonomischem Interesse sind beim Dampfspalten flüssiger Kohlenwasserstoffeinsätze wie Naphtha entstehende polymerisierbare aromatische Verbindungen, insbesondere solche mit neun Kohlenstoffatomen. Hierunter fallen Inden und sogenannte Vinyltoluole (α-, o-, m-, p-Methylstyrol, nicht β-Methylstyrol), jedoch auch das zehn Kohlenstoffatome aufweisende Harzmonomer Methylinden. Diese sogenannten "Actives" finden z.B. als Grundstoffe bei der Herstellung von Klebstoffen Verwendung. Der Siedebereich der genannten Verbindungen reicht dabei von 166 °C (α-Methylstyrol) bis 203 °C (Methylinden). Flankiert werden die Verbindungen mit neun Kohlenstoffatomen von Styrol (Siedepunkt 145 °C), bei dem es sich ebenfalls um ein "Active" handelt, und das bis zu einem gewissen Anteil in einem entsprechenden Gemisch akzeptabel ist, sowie Naphthalin (Siedepunkt 220 °C), das als Störkomponente unerwünscht ist. Bei der Spaltung entstehen darüber hinaus (uninteressante) Begleitkomponenten im genannten Siedebereich (insbesondere gesättigte Aromaten). Außerdem entstehen durch Dimerisation von Cyclo- und Methylcyclopentadien Störkomponenten, insbesondere Cyclopentadiene und deren Dimere (DCPD), beispielsweise endo- und exo-DCPD, Methyl-DCPD, und Dimethyl-DCPD. Bezüglich weiterer Details und zu typischen Zusammensetzungen entsprechender Fraktionen sei auf einschlägige Fachliteratur, beispielsweise Mildenberg et al., "Hydrocarbon Resins", VCH 1997, insbesondere Abschnitt 2.2.1, "Aromatic Hydrocarbon Resins", verwiesen.

Ist nachfolgend von "polymerisierbaren aromatischen Verbindungen" die Rede, seien hierunter insbesondere die in typischen C9-Harzölen (engl. C9 Resin Oil) enthaltenen Verbindungen der genannten Art, insbesondere die erwähnten Actives, verstanden. Ist davon die Rede, dass polymerisierbare aromatische Verbindungen mit neun Kohlenstoffatomen gewonnen werden, sei hierunter insbesondere auch verstanden, dass eine Fraktion gewonnen wird, die diese polymerisierbaren aromatischen Verbindungen zu einem beträchtlichen Anteil enthält, jedoch auch noch andere Verbindungen wie die erwähnten anderen Komponenten, insbesondere Styrol und Methylinden, enthalten kann. Die Fraktion kann, nach einer Destillation zu deren Gewinnung, insbesondere mehr als 30, insbesondere mehr als 40 oder mehr als 50 mol-% dieser Verbindungen enthalten und außerdem Verbindungen enthalten, die thermisch nicht abgetrennt werden können. Nach einer weiteren Extraktion kann eine derartige Fraktion reich an den polymerisierbaren aromatischen Verbindungen im oben erläuterten Sinn sein.

Die vorliegende Erfindung geht von einem grundsätzlich bekannten Verfahren zur Gewinnung polymerisierbarer aromatischer Verbindungen mit neun Kohlenstoffatomen aus, bei dem zumindest teilweise mittels Dampfspalten ein Komponentengemisch gebildet wird. Die vorliegende Erfindung betrifft dabei insbesondere Dampfspaltverfahren, in denen, wie erwähnt, flüssige oder zumindest teilweise flüssige bzw. schwere Einsätze verwendet werden, insbesondere Naphtha. Es versteht sich jedoch, dass entsprechende Verfahren auch zumindest teilweise unter Verwendung von leichten Einsätzen durchgeführt werden können. Voraussetzung für das erfindungsgemäße Verfahren ist insbesondere, dass ein mittels eines entsprechenden Dampfspaltverfahrens gebildetes Komponentengemisch die zuvor bezüglich Pyrolysebenzin erläuterten Komponenten in nennenswertem und in einem ersten Abschnitt wie erläutert abtrennbarem Umfang enthält.

Wie an sich grundsätzlich bekannt, werden Komponentengemische, die zumindest teilweise mittels Dampfspalten erhalten wurden, einer Aufbereitungssequenz umfassend eine Benzinentfernung und danach einer Verdichtung und einer

Fraktionierung unterworfen werden. Zu weiteren Details sei auf die Erläuterungen in der Einleitung und die dort zitierte Fachliteratur verwiesen. Wie dort ebenfalls erwähnt, werden im Zuge der Benzinentfernung, die Teil der Aufbereitung ist, und/oder während der Verdichtung, d.h. noch vor der eigentlichen (thermischen) Fraktionierung, eine oder mehrere Pyrolysebenzinfraktionen gebildet. Stromab der Verdichtung, d.h. in der Fraktionierung, werden typischerweise eine oder mehrere weitere Pyrolysebenzinfraktionen gebildet. Diese werden jedoch im Rahmen der vorliegenden Erfindung nicht verwendet.

Die vorliegende Erfindung beruht auf der Erkenntnis, dass die Gewinnung der erwähnten polymerisierbaren aromatischen Verbindungen mit neun Kohlenstoffatomen aus Pyrolysebenzin aus der oder den Pyrolysebenzinfraktionen, die bis einschließlich der Rohgasverdichtung gebildet werden, oder einem Teil hiervon, aber nicht aus der oder den Pyrolysebenzinfraktionen, die stromab hiervon gebildet werden, besondere Vorteile bietet. Insbesondere bietet die vorliegende Erfindung dabei den Vorteil, dass kein bzw. nur ein geringer Einfluss der Gewinnung der polymerisierbaren aromatischen Verbindungen mit neun Kohlenstoffatomen auf die Kernprozesse eines entsprechenden Verfahrens besteht. Die Gewinnung ist also weitgehend unabhängig vom Kernprozess, d.h. der Gewinnung der eigentlichen Zielprodukte des Verfahrens zum Dampfspalten wie beispielsweise Ethylen und anderer aromatischer Verbindungen. Insgesamt ergibt sich durch die vorliegende Erfindung ferner ein geringes Betriebsrisiko und eine besonders große Effizienz bei der Rückgewinnung entsprechender Verbindungen bzw. eine hohe Ausbeute. Die Verbindungen können insbesondere weitgehend oder vollständig frei von nur schwer abzutrennenden Stör- bzw. Begleitkomponenten gebildet werden. Bei derartigen Störkomponenten handelt es sich beispielsweise um Ölkomponenten, Styren und Verbindungen, die bei relativ moderaten Temperaturen fest werden, insbesondere Naphthalen. Letzteres ist in dem im Rahmen der vorliegenden Erfindung verwendeten Pyrolysebenzin in nicht mehr als 5 mol-% enthalten. Gemäß der vorliegenden Erfindung wure, zusammengefasst, überraschenderweise festgestellt, dass schweres Pyrolysebenzin vorteilhafterweise zur Gewinnung von polymerisierbaren aromatischen Verbindungen mit neun Kohlenstoffatomen eingesetzt werden kann. Ein weiterer Vorteil der Verwendung von schwerem Pyrolysebenzin ist, dass stromabwärtige Hydrierschritte vor einer Kontamination mit Störkomponenten geschützt werden.

Dadurch, dass die Gewinnung keinen oder nur geringen Einfluss auf die Kernprozesse des Verfahrens hat, kann das erfindungsgemäß vorgeschlagene Verfahren auch besondere einfach und kostengünstig in bestehende Anlagen nachgerüstet werden, ohne dass hierbei andere Anlagenteile angepasst werden müssten. Durch die hohe Effizienz in der Rückgewinnung und die Gewinnung mit wenig oder ohne Stör- bzw. Begleitkomponenten kann die Wirtschaftlichkeit des Prozesses insgesamt gegenüber bekannten Verfahren deutlich verbessert werden.

Grundsätzlich ist es auch möglich, die erläuterten polymerisierbaren aromatischen Verbindungen mit neun Kohlenstoffatomen in einem entsprechenden Verfahren aus einer Pyrolyseölfraktion zu gewinnen, wie beispielsweise in der EP 0 602 302 A1 beschrieben. Dies ist allerdings unvorteilhaft, weil hier, im Gegensatz zur vorliegenden Erfindung, ein Engriff in die Ölsäule und damit den Kernprozess erfolgt. Der Abzug aus der Ölsäule verändert die Betriebsparameter und beeinflusst damit stets das Gesamtverfahren. Mit anderen Worten besteht keine Unabhängigkeit der Gewinnung der polymerisierbaren aromatischen Verbindungen mit neun Kohlenstoffatomen von den anderen Prozessen. Ferner ist die Zusammensetzung der aus der Ölsäule abgezogenen Fraktion in der EP 0 602 302 A1 stets stark abhängig von den Betriebsbedingungen und der Zusammensetzung des Spaltgases und damit ggf. entsprechend wenig konstant. Eine entsprechende Fraktion ist ferner am schweren und leichten Ende mit schwereren bzw. leichteren Komponenten "verunreinigt", wohingegen dies im Rahmen der vorliegenden Erfindung lediglich hinsichtlich der leichteren Verbindungen der Fall ist. Die Aufreinigung gestaltet sich daher im Rahmen der vorliegenden Erfindung deutlich einfacher. Außerdem ist die Gefahr der Verlegung von Anlagenteilen durch die schwereren Verbindungen deutlich reduziert.

Die vorliegende Erfindung schlägt daher vor, einen Trenneinsatz zu bilden, der ausschließlich Pyrolysebenzin aus der oder zumindest einer der Pyrolysebenzinfraktionen enthält, die in der Pyrolysebenzinentfernung und/oder während der Verdichtung gebildet wird oder werden, den Trenneinsatz einer Trennung zu unterwerfen, und in der Trennung eine Fraktion zu bilden, die gegenüber dem Trenneinsatz im zuvor erläuterten Sinn an den polymerisierbaren aromatischen Verbindungen mit neun Kohlenstoffatomen angereichert ist. Weil der Trenneinsatz ausschließlich aus Pyrolysebenzin aus der oder wenigstens einer der Pyrolysebenzinfraktionen gebildet wird, die in der Pyrolysebenzinentfernung und/oder während der Verdichtung gebildet wird oder werden, ist die erhaltene Fraktion auch an polymerisierbaren aromatischen Verbindungen mit neun Kohlenstoffatomen in Bezug auf diese Fraktion(en) angereichert. Für die Trennung kann, wie auch nachfolgend noch erläutert, eine herkömmliche Trennkolonne zum Einsatz kommen. In der Trennung wird eine schwere Benzinfraktion eingesetzt und eine Rohbenzinfraktion als Kopfprodukt gebildet. Ein entsprechendes Sumpfprodukt enthält Ölkomponenten und Di- bzw. Oligomere sowie einen Teil von Verbindungen mit neun Kohlenstoffatomen und deren Begleitkomponenten. Das Sumpfprodukt wird daher vorteilhafterweise zu einer Ölgewinnung bzw. Ölabtrennung zurückgeführt, so dass die genannten Komponenten in die leichte Fraktion der Ölabtrennung übergehen und damit für die anschließende Gewinnung weiter zur Verfügung stehen. Wie auch nachfolgend erläutert, kann hierbei insbesondere eine Strippung zum Einsatz kommen. Das Sumpfprodukt kann aber auch direkt ausgeführt werden.

Im Rahmen der vorliegenden Erfindung wird ferner die zuvor erwähnte Fraktion vorteilhafterweise zumindest teilweise einer weiteren Trennung als ein weiterer Trenneinsatz zugeführt, wobei in der weiteren Trennung eine weitere Fraktion gebildet wird, die gegenüber dem weiteren Trenneinsatz an aromatischen Verbindungen mit neun Kohlenstoffatomen angereichert ist. Die weitere Fraktion kann die polymerisierbaren aromatischen Verbindungen ebenfalls in einem Gehalt von beispielsweise mehr als 30, mehr als 40 oder mehr als 50 mol-% enthalten und kann insbesondere im oben erläuterten Sinn reich an diesen Verbindungen im erläuterten Sinn sein. Die vorliegende Erfindung schlägt gemäß dieser Ausgestaltung daher einen destillativen Prozess vor, der die Verschaltung von zwei Trennschritten und insbesondere zwei Trennkolonnen umfasst. Auf diese Weise kann die Anzahl der erforderlichen Apparate minimiert werden. Die zwei Trennschritte bzw. Trennkolonnen können dabei auch insbesondere unter Verwendung gemeinsamer Apparate bzw. Heizmittel und dergleichen betrieben werden.

Die bereits erwähnte Aufbereitung des zumindest teilweise mittels Dampfspalten gebildeten Komponentengemischs umfasst eine Ölentfernung und eine Benzinentfernung stromauf der Verdichtung, wie bereits erwähnt. Die eine oder die mehreren Pyrolysefraktionen, aus der oder denen Pyrolysebenzin zumindest teilweise der Trennung zugeführt wird, wird oder werden dabei bei der Benzinentfernung und/oder der Verdichtung gebildet. Es werden keine später gebildeten Pyrolysebenzinfraktionen oder Teile hiervon in die Vortrennung eingespeist.

Mit anderen Worten werden in der Fraktionierung auch eine oder mehrere weitere Pyrolysebenzinfraktionen gebildet, wobei der Trenneinsatz aber frei von Pyrolysebenzin aus der einen oder den mehreren weiteren Pyrolysebenzinfraktionen ist. Dies ermöglicht eine besonders vorteilhafte Durchführung des erfindungsgemäßen Prozesses, weil auf diese Weise Störkomponenten wie (Methyl-)Dicyclopentadien und die anderen erwähnten schwereren Störkomponenten, die nicht oder nur schwer destillativ abgetrennt werden können, nicht in die der Trennung unterworfene Fraktion gelangen. In den Pyrolysebenzinfraktionen, die in der Aufbereitung und der Verdichtung gebildet werden, sind entsprechende Verbindungen nur in tolerierbaren Anteilen enthalten.

Besonders vorteilhaft ist es, wenn der Hauptanteil an polymerisierbaren aromatischen Verbindungen mit neun Kohlenstoffatomen aus dem zumindest teilweise mittels Dampfspalten gebildeten Komponentengemisch in die eine oder die mehreren Pyrolysebenzinfraktionen übergehen. Dies ist insbesondere dann der Fall, wenn ein in einer Ölentfernung der Aufbereitungssequenz gewonnenes Pyrolyseöl einer Ölstrippung unterworfen wird, in der leichte Verbindungen wie die genannten polymerisierbaren aromatischen Verbindungen mit neun Kohlenstoffatomen aus dem Pyrolyseöl ausgetrieben werden. Mit anderen Worten wird im Rahmen der vorliegenden Erfindung also vorteilhafterweise in der Ölentfernung eine Pyrolyseöl enthaltene Fraktion gebildet, wobei aus der Pyrolyseöl enthaltenden Fraktion in einer Ölstrippung Komponenten ausgestrippt werden. Diese werden vorteilhafterweise gasförmig in die Ölentfernung zurückgeführt, so dass diese dort in eine leichte Fraktion übergehen können, die anschließend in die Benzinentfernung eingespeist wird. In der Benzinentfernung können entsprechende Komponenten, darunter die polymerisierbaren aromatischen Verbindungen mit neun Kohlenstoffatomen, in das Pyrolysebenzin übergehen.

Vorteilhafterweise wird im Rahmen der vorliegenden Erfindung auch eine Benzinstrippung durchgeführt, d.h. das Bilden der einen oder der mehreren Pyrolysebenzinfraktionen umfasst, dass eine oder mehrere Pyrolysebenzin enthaltende Fraktionen in der Benzinentfernung gebildet werden und dass die letzteren zumindest teilweise einer Benzinstrippung unterworfen, wo aus der oder den Fraktionen leichtere Komponenten ausgetrieben werden. Auf diese Weise wird eine Abreicherung an leichteren Komponenten und eine Verbesserung des oder der Trennschritte erzielt. Es sei darauf hingewiesen, dass auch in eine entsprechende Benzinstrippung kein Pyrolysebenzin eingespeist wird, das in der Fraktionierung stromab der Rohgasverdichtung gebildet wird, da dieses die erwähnten Störkomponenten enthält. Ebenso werden hierbei vorteilhafterweise keine schweren Komponenten einer Benzinaufbereitung eingesetzt, da hier (Methyl-)Dicyclopentadien und/oder deren Hydrierungsprodukte und andere der genannten schwereren Störkomponenten enthalten sein können. Pyrolysebenzin aus einer stromabwärtigen Fraktionierung kann im Gegensatz dazu diese Störkomponenten enthalten.

In der Benzinstrippung wird oder werden die eine oder die mehreren Pyrolysebenzinfraktionen vorteilhafterweise zumindest teilweise in der Benzinstrippung gebildet. Es ist jedoch auch möglich, einen Teil von in den zuvor erläuterten Schritten gebildetem Pyrolysebenzin ohne eine entsprechende Benzinstrippung der Trennung zuzuführen.

Vorteilhafterweise wird die Trennung unter Verwendung einer Trennböden aufweisenden Trennkolonne durchgeführt, wobei die Zwischenfraktion der Trennkolonne über einen Seitenabzug entnommen wird. Die Entnahme kann vorzugsweise gasförmig, grundsätzlich aber auch flüssig erfolgen, wie unter Bezugnahme auf die Zeichnungen erläutert. Eine entsprechende Trennkolonne weist dabei vorteilhafterweise konventionelle Trennböden in Form von Blechen mit entsprechenden Strukturierungen bzw. Abläufen auf, so dass diese besonders einfach und kostengünstig erstellt werden können.

In der Trennung werden vorteilhafterweise ferner ein überwiegend oder ausschließlich Verbindungen mit mehr als neun Kohlenstoffatomen aufweisendes flüssiges Sumpfprodukt und ein überwiegend oder ausschließlich Verbindungen mit weniger als neun Kohlenstoffatomen aufweisendes gasförmiges Kopfprodukt gebildet.

Das Sumpfprodukt der Vortrennung enthält Ölkomponenten, die in die Pyrolysebenzinfraktion übergehen und insbesondere Di- oder Oligomere sowie anteilig, wie erwähnt, aromatische Kohlenwasserstoffe mit neun Kohlenstoffatomen aufweisen. Dieses Sumpfprodukt wird dabei vorteilhafterweise in die Ölabtrennung zurückgeführt, wie ebenfalls bereits erwähnt, um den Anteil entsprechender Verbindungen nicht zu verlieren. Insbesondere kann das Sumpfprodukt in eine Ölstrippung eingespeist werden, wo entsprechende leichtere Verbindungen ausgetrieben werden können. Alternativ dazu kann das Sumpfprodukt direkt abgezogen werden, wenn erwünscht.

Das Kopfprodukt der Trennung wird typischerweise in einer nachgeschalteten Hydrierung weiterverarbeitet und beispielsweise als Produkt für die Zumischung in Fahrtreibstoffe bzw. zur Aromatenextraktion genutzt. Es kann dabei insbesondere mit weiteren Fraktionen vereinigt werden. Da Nebenkomponenten hier nicht mehr stören, kann das Kopfprodukt auch mit nach der Rohgasverdichtung in der Fraktionierung gebildeten Pyrolysebenzinfraktionen vereinigt werden. Die Zwischenfraktion, die der Trennkolonne über einen Seitenabzug entnommen wird, wird der Feintrennung zugeführt, da diese insbesondere noch Anteile leichterer Stör- bzw. Begleitkomponenten, insbesondere Styrol, enthält.

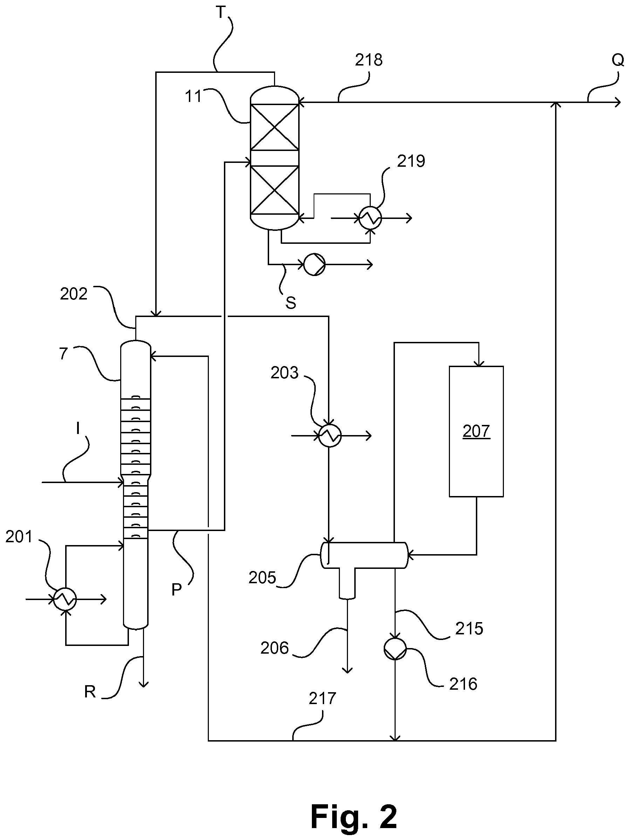

Die weitere Trennung wird insbesondere unter Verwendung einer Trennkolonne durchgeführt, in die in einem mittleren Bereich die Zwischenfraktion eingespeist wird. Diese Trennkolonne kann dabei insbesondere einen oder mehrere Packungsabschnitte aufweisen. Näheres wird im Detail unter Bezugnahme auf die beigefügten Zeichnungen näher erläutert. Es kann auch vorgesehen sein, für die weitere Trennung eine Trennkolonne zu verwenden, die teilweise mit einer Packung und teilweise mit konventionellen Trennböden ausgestattet ist, wie dies insbesondere im Zusammenhang mit Figur 2 näher erläutert wird.

Auch in der weiteren Trennung werden vorteilhafterweise ein Sumpfprodukt und ein Kopfprodukt gebildet, wobei die Produktfraktion in der Feintrennung als das Sumpfprodukt gebildet wird. Es versteht sich, dass ein entsprechendes Sumpfprodukt auch weiter aufbereitet, beispielsweise aufgereinigt werden kann, um eine besonders reine Produktfraktion zu erhalten. Es ist auch möglich, die Produktfraktion weiter in einzelne Komponenten zu fraktionieren, falls dies erforderlich scheint. Die weitere Trennung dient insbesondere dem Zweck, über Kopf die noch in der Zwischenfraktion enthaltenen leichten Stör- bzw. Begleitkomponenten abzutrennen und zurückführen zu können. Das Kopfprodukt wird dabei insbesondere in die Trennung bzw. in ein Kondensator- bzw. Rücklaufsystem hiervon eingespeist.

Vorteilhafterweise werden die für die Trennung und die für die weitere Trennnung verwendeten Trennkolonnen jeweils unter Verwendung von Sumpfverdampfern beheizt, in denen ein gemeinsames Heizmedium, jedoch ggf. auf unterschiedlichen Temperaturen, eingesetzt wird. Hierbei kann es sich insbesondere um Dampf handeln, der beispielsweise durch einen Sumpfverdampfer in der weiteren Trennung und durch einen Sumpfverdampfer in der Trennung geführt wird.

Sowohl die Trennung als auch die weitere Trennung werden im Rahmen der vorliegenden Erfindung vorteilhafterweise unter Verwendung von flüssigen Rückläufen durchgeführt. Hierbei kann der in der Trennung und der in der weiteren Trennung verwendete flüssige Rücklauf unter Verwendung zumindest eines Teils des Kopfprodukts der Trennung gebildet werden. In diesem Fall ist es möglich, lediglich ein Kondensatorsystem einzusetzen, um Rückläufe für beide Kolonnen bereitzustellen. Vorteilhafterweise wird die Zwischenfraktion der Trennung dabei gasförmig entnommen. Alternativ dazu ist es auch möglich, den in der Trennung verwendeten flüssigen Rücklauf wie zuvor unter Verwendung zumindest eines Teils des Kopfprodukts der Trennung zu bilden, jedoch den in der weiteren Trennung verwendeten flüssigen Rücklauf unter Verwendung zumindest eines Teils der in der weiteren Trennjung gebildeten Kopfprodukts zu bilden. In letzterem Fall wird die Zwischenfraktion der Trennung insbesondere flüssig entnommen und in die weitere Trennung überführt. Dies ermöglicht es beispielsweise, die Zwischenfraktion mittels einer Pumpe zu fördern und damit ggf. über weitere Strecken von verschiedenen Anlagen zusammenzuführen.

Mit besonderem Vorteil werden die Trennung und die weitere Trennung im Rahmen der vorliegenden Erfindung unter einem (leichten) Vakuum durchgeführt, wobei beide Kolonnen unter Verwendung eines gemeinsamen Vakuumsystems evakuiert werden können, das im Detail unter Bezugnahme auf die beigefügten Zeichnung erläutert ist. Ein besonderer Vorteil dieser Ausgestaltung der vorliegenden Erfindung ist also, dass für beide Kolonnen nur ein gemeinsames Vakuumsystem zur Verfügung stehen muss. Ein Betrieb im Vakuum ermöglicht eine geringe Temperatur in der Trennung, die den Vorteil bietet, dass Verlegungen durch Polymerisation weitgehend vermieden werden können. Die erwähnten Störkomponenten werden aus dem Monomer (Methyl-) Dicyclopentadien bei erhöhter Temperatur gebildet, so dass eine geringere Temperatur auch eine Bildung entsprechender Verbindungen unterdrückt. In herkömmlichen Fraktionierungen ist der Hauptentstehungsort von (Methyl-)Dicyclopentadien ein Debutanizer, da hier hohe Konzentrationen des Monomers und eine erhöhte Temperatur vorliegen. Deutlich geringer ist die Bildung jedoch in den zuvor erläuterten stromaufwärtigen Abtrennschritten, so dass Pyrolysebenzin aus entsprechenden Schritten im Rahmen der vorliegenden Erfindung eingesetzt wird.

Die vorliegende Erfindung bezieht sich auch auf eine Anlage zur Gewinnung polymerisierbarer aromatischer Verbindungen mit neun Kohlenstoffatomen, wobei die Anlage Mittel aufweist, die dafür eingerichtet sind, zumindest teilweise mittels Dampfspalten ein Komponentengemisch zu bilden, Mittel, die dafür eingerichtet sind, das Komponentengemisch wenigstens teilweise einer Aufbereitung umfassend eine Benzinentfernung und danach einer Verdichtung und einer Fraktionierung zu unterwerfen, und Mittel, die dafür eingerichtet sind, in der Benzinentfernung und/oder während der Verdichtung eine oder mehrere Pyrolysebenzinfraktion zu bilden. Erfindungsgemäß sind Mittel bereitgestellt, die dafür eingerichtet sind, einen Trenneinsatz zu bilden, der ausschließlich Pyrolysebenzin aus der oder zumindest einer der Pyrolysebenzinfraktionen aufweist, die in der Benzinentfernung und/oder während der Verdichtung gebildet wird oder werden, und Mittel, die dafür eingerichtet sind, den Trenneinsatz zumindest teileweise einer Trennung zu unterwerfen, wobei die Trennung dafür eingerichtet ist, zumindest eine Fraktion zu bilden, die gegenüber dem Trenneinsatz an polymerisierbaren aromatischen Verbindungen mit neun Kohlenstoffatomen angereichert ist.

Bezüglich Merkmalen und Vorteilen einer entsprechenden Anlage, die vorteilhafterweise Mittel aufweist, die sie zur Durchführung eines Verfahrens in den zuvor erläuterten Ausgestaltungen befähigen, sei auf die obigen Ausführungen ausdrücklich verwiesen.

Ausführungsformen der Erfindung werden nachfolgend unter Bezugnahme auf die beigefügten Zeichnungen näher erläutert.

### Kurze Beschreibung der Zeichnungen

Figur 1 zeigt ein Verfahren gemäß einer Ausführungsform der Erfindung in Form eines schematischen Prozessflussdiagramms.
Figur 2 zeigt einen Teil eines Verfahrens gemäß einer Ausführungsform der Erfindung in Form eines schematischen Prozessflussdiagramms.
Figur 3 zeigt einen Teil eines Verfahrens gemäß einer Ausführungsform der Erfindung in Form eines schematischen Prozessflussdiagramms.

### Ausführliche Beschreibung der Zeichnungen

In den Figuren tragen einander funktional oder baulich entsprechende Elemente einander entsprechende Bezugszeichen und werden der Übersichtlichkeit halber nicht wiederholt erläutert. Die nachfolgenden Erläuterungen betreffen dabei Verfahren und entsprechende Anlagen in gleicher Weise. Es versteht sich, dass entsprechende Anlagen bzw. Verfahren in der Praxis auch optionale oder obligatorische weitere Komponenten bzw. Verfahrensschritte umfassen können. Diese sind in den nachfolgenden Figuren lediglich der Übersichtlichkeit halber nicht dargestellt.

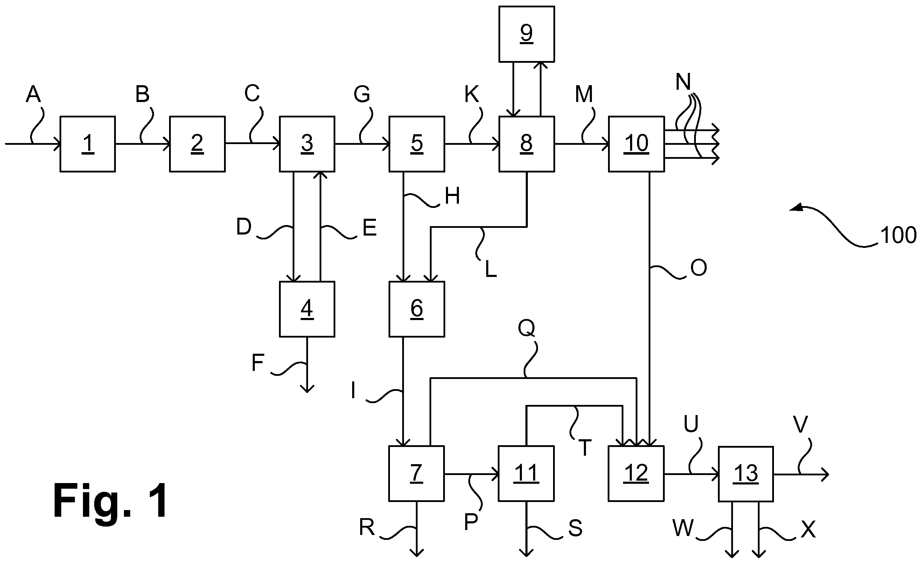

In Figur 1 ist ein Verfahren gemäß einer bevorzugten Ausführungsform der vorliegenden Erfindung in Form eines schematischen Prozessflussdiagramms veranschaulicht. Das Verfahren ist insgesamt mit 100 bezeichnet.

In dem Verfahren 100 wird oder werden einem oder mehreren Spaltöfen 1, der oder die bei gleichen oder unterschiedlichen Spaltbedingungen betrieben werden können, ein oder mehrere Spalteinsätze A zusammen mit Dampf zugeführt und zumindest teilweise thermisch gespalten. Der oder die Spalteinsätze A umfassen dabei im dargestellten Beispiel flüssige Einsätze, insbesondere Naphtha.

Dem oder den Spaltöfen 1 wird bzw. werden im dargestellten Beispiel ein oder mehrere Komponentengemische B entnommen und einer raschen Abkühlung 2 unterworfen, um die Spaltreaktionen zum Stillstand zu bringen und die nachfolgenden Schritte zu ermöglichen. Dies kann unter Verwendung eines oder mehrerer Transferleitungstauscher (engl. Transfer Line Exchanger, TLE) erfolgen.

Nach der Abkühlung wird das Komponentengemisch, nun mit C bezeichnet, einer Ölentfernung 3 zugeführt, die insbesondere unter Verwendung einer oder mehrerer bekannter Ölsäulen mit zirkulierendem Ölkreislauf durchgeführt werden kann (nicht im Detail veranschaulicht). In der Ölentfernung 3 wird Pyrolyseöl D in einer oder mehreren Fraktionen aus dem Komponentengemisch C abgetrennt.

Das Pyrolyseöl D wird im dargestellten Beispiel einer Ölstrippung 4 unterworfen, um mit dem Pyrolyseöl D abgeschiedene leichtere Verbindungen E, darunter insbesondere polymerisierbare aromatische Verbindungen mit 9 Kohlenstoffatomen, zurückzugewinnen. Diese werden gasförmig in die Ölentfernung 3, beispielsweise in die oder eine der dort verwendeten Ölsäulen, zurückgeführt.

Der nach der Ölstrippung 4 verbleibende Rest F des Pyrolyseöls D kann teilweise flüssig als Rücklauf in die Ölentfernung 3 zurückgeführt, beispielsweise auf die oder eine der verwendeten Ölsäulen aufgegeben, und teilweise als Produkt in Form von Cracköl dem Verfahren 100 entzogen werden (nicht im Detail veranschaulicht). Zusätzlich oder alternativ kann auch nicht der Ölstrippung 4 unterworfenes Pyrolyseöl D als Rücklauf in die Ölentfernung 3 zurückgeführt werden.

Eine nach der Ölentfernung 3 verbleibender Rest G wird einer Benzinentfernung 5 zugeführt, in der beispielsweise eine Wasserquenchsäule mit einem Wasserkreislauf oder andere Apparate eingesetzt werden (nicht im Detail veranschaulicht). In der Benzinentfernung 5 wird (schweres) Pyrolysebenzin H abgetrennt.

Das schwere Pyrolysebenzin H wird im dargestellten Beispiel zumindest teilweise einer Benzinstrippung 6 zugeführt, um leichte Komponenten zu entfernen. Letztere können dem Verfahren entzogen werden, beispielsweise durch Abfackeln, oder an geeigneter Stelle in das Verfahren zurückgeführt werden (nicht im Detail veranschaulicht). Ein Teil des schweren Pyrolysebenzins H kann vor und/oder nach der Benzinstrippung 6 in die Ölentfernung 3 zurückgeführt werden. Beispielsweise kann es als Rücklauf auf die oder eine der verwendeten Ölsäulen aufgegeben werden.

Das in der Benzinstrippung 6 erhaltene gestrippte Pyrolysebenzin, nun mit I bezeichnet, wird einer Trennung 7 (nachfolgend als Vortrennung bezeichnet) zugeführt, wie unten näher erläutert. Es kann auch vorgesehen sein, einen Teil des schweren Pyrolysebenzins H ohne Strippung direkt der Vortrennung 7 zuzuführen.

Ein nach der Benzinentfernung 5 verbleibender Rest K wird im dargestellten Beispiel einer insbesondere mehrstufigen Rohgasverdichtung 8 zugeführt, im Zuge derer eine Sauergasentfernung 9 erfolgen kann. Zu Details sei auf die eingangs zitierte Fachliteratur verwiesen. Details und abgeschiedene Verbindungen sind nicht veranschaulicht. In der Rohgasverdichtung 6 kann weiteres Pyrolysebenzin L abgeschieden werden, das beispielsweise ebenfalls der Benzinstrippung 6 oder direkt der Vortrennung 7 zugeführt werden kann.

Das von Sauergasen befreite, verdichtete Komponentengemisch M wird einer Fraktionierung 10 zugeführt, in der mehrere Fraktionen, hier exemplarisch mit N veranschaulicht, gebildet werden. Die Fraktionierung kann unter Verwendung beliebiger Apparate durchgeführt werden. Die Fraktionen N umfassen beispielsweise Fraktionen, die überwiegend oder ausschließlich Verbindungen mit zwei, drei, vier oder mehr als vier Kohlenstoffatomen aufweisen, oder entsprechende Sammelfraktionen oder spezifische Kohlenwasserstoffe wie Ethan oder Ethylen. Die Fraktionen N werden einer geeigneten Verwendung zugeführt.

In der Fraktionierung 10 kann weiteres Pyrolysebenzin O gebildet werden, das aus den zuvor erläuterten Gründen jedoch nicht der Benzinstrippung 6 bzw. der Vortrennung 7 zugeführt wird. Seine Verwendung wird unten näher erläutert.

In der Vortrennung 7 wird, wie in Figur 2 weiter erläutert, aus dem schweren Pyrolysebenzin H und ggf. L bzw. I eine Fraktion P gebildet, die an Verbindungen mit neun Kohlenstoffatomen angereichert ist. Hierbei handelt es sich insbesondere um polymerisierbare aromatische Verbindungen, auf deren Gewinnung die vorliegende Erfindung insbesondere gerichtet ist. Die Fraktion P wird in eine weitere Trennung 11 (nachfolgend als Feintrennung bezeichnet) überführt. Ferner wird eine Fraktion Q gebildet, die an leichteren Verbindungen angereichert ist, und eine Fraktion R, die an schwereren Verbindungen angereichert ist. Die Fraktion Q kann einer Hydrierung 12 zugeführt werden, die Fraktion R kann beispielsweise in die Ölstrippung 4 zurückgeführt werden.

In der Feintrennung 11 werden eine Produktfraktion S, die überwiegend oder ausschließlich die Verbindungen mit neun Kohlenstoffatomen enthält, und eine Restfraktion T, die überwiegend oder ausschließlich andere Verbindungen enthält, gebildet. Letztere kann ebenfalls in die Hydrierung 12 überführt werden. Auch das bereits erwähnte Pyrolysebenzin O kann in die Hydrierung 12 überführt werden.

Eine in der Hydrierung 12 gebildete hydrierte Fraktion U kann einer Aromatenextraktion zugeführt werden, in der insbesondere eine Fraktion V, die überwiegend oder ausschließlich Verbindungen mit fünf bis acht Kohlenstoffatomen enthält, sowie eine oder mehrere schwerere Fraktionen W, X gebildet werden.

In Figur 2 sind Details eines Verfahrens gemäß einer Ausführungsform der Erfindung, beispielsweise des Verfahrens 100 gemäß Figur 1, dargestellt. Die Bezeichnung der jeweiligen Einrichtungen, Stoffströme und Fraktionen entspricht der Figur 1. Die in Figur 2 veranschaulichte Ausgestaltung kann auch in anderen Verfahren als dem in Figur 1 veranschaulichten Verfahren 100 zum Einsatz kommen.

Insbesondere aus einer Benzinstrippung 6 (siehe Figur 1) stammendes und ggf. in einem Tank zwischengespeichertes schweres Pyrolysebenzin I wird dabei in die Vortrennung 7 eingespeist, die im dargestellten Beispiel unter Verwendung einer Kolonne mit konventionellen Trennböden vorgenommen wird. Im dargestellten Beispiel wird die Vortrennung 7 auf einem Temperaturniveau von 140 °C bis 180 °C, insbesondere von 150 °C bis 165 °C, im Sumpf der Sä ule, auf einem Temperaturniveau von 60 °C bis 100 °C, insbesondere von 70 °C bis 90 °C, ab Kopf der Säule und auf einem Druckniveau von 0,5 bis 1 bar (abs.), insbesondere von etwa 0,8 bar (abs.) durchgeführt. Die Temperatur am Kopf der Säule hängt insbesondere von der Zusammensetzung des Einsatzes (beispielsweise mit/ohne Kohlenwasserstoffe mit fünf Kohlenstoffatomen) ab und kann entsprechend variieren.

Die Vortrennung 7 wird unter Verwendung eines Sumpfverdampfers 201 durchgeführt, der beispielsweise mittels Dampf auf einem Druckniveau von ca. 22 bar beheizt wird. Aus der Vortrennung 7 wird der Stoffstrom Q abgezogen, der überwiegend oder ausschließlich Verbindungen mit fünf bis acht Kohlenstoffatomen umfasst und eine Rohbenzinfraktion darstellt. Die schwereren Verbindungen scheiden sich flüssig ab und können in Form des Stoffstroms R abgezogen werden. Das Sumpfprodukt der Vortrennung 7 und damit der Stoffstrom R umfasst typische Ölkomponenten und Nebenkomponenten wie Di-/Oligomere mit mehr als zwölf Kohlenstoffatomen sowie anteilig polymerisierbare aromatische Verbindungen mit 9 Kohlenstoffatomen und deren Begleitkomponenten. Der Stoffstrom R wird daher vorteilhafterweise in die Ölentfernung 3 (siehe Figur 1) zurückgeführt, um diese Verbindungen nicht zu verlieren.

Über einen Gasabzug kann die Fraktion P abgezogen werden, die insbesondere an polymerisierbaren aromatischen Verbindungen mit neun Kohlenstoffatomen angereichert ist. Diese Fraktion bzw. der Stoffstrom P umfasst jedoch noch einen signifikanten Anteil an leichten Stör- bzw. Begleitkomponenten (insbesondere Styrol).

Ein Stoffstrom 202, der als Kopfprodukt der Vortrennung 7 gebildet wird, wird in einem oder mehreren Wärmetauschern 203 gekühlt, der oder die beispielsweise mit Kühlwasser betrieben werden können, und anschließend in einen Wasserabscheider 205 eingespeist. Wasser, das insbesondere aufgrund der nachfolgend erläuterten Evakuierung in den Wasserabscheider 205 gelangt, wird in Form eines Stoffstroms 206 abgezogen.

Der Wasserabscheider 205 wird unter Verwendung eines stark vereinfacht dargestellten und in an sich bekannter Weise ausgebildeten Vakuumsystems 207 auf ein leichtes Vakuum von beispielsweise ca. 0,9 bar oder weniger, beispielsweise bei 0,8 oder 0,7 bar, gebracht.

Ein von Wasser befreites Kondensat 215 aus dem Wasserabscheider 205 wird mittels einer Pumpe 216 teilweise als Rücklauf 217 zur Vortrennung 7 und teilweise als Rücklauf 218 zur Feintrennung 11 befördert. Ein weiterer Anteil kann als die Rohbenzinfraktion Q (siehe Figur 1) abgezogen und wie oben erläutert weiter aufbereitet werden. Die Vortrennung 7 wird im dargestellten Beispiel unter Verwendung einer Packungskolonne mit zwei Packungsbereichen vorgenommen. Der untere Packungsbereich kann auch durch konventionelle Trennböden ersetzt werden.

Die Feintrennung 11 wird unter Verwendung eines Sumpfverdampfers 219 vorgenommen, der mittels Dampf beheizt wird. Der in dem Sumpfverdampfer 219 verwendete Dampf kann anschließend in dem Sumpfverdampfer 201 zur Beheizung eingesetzt werden. In der Feintrennung 11 werden der Produktstrom S als Sumpf- und der Stoffstrom T als Kopfprodukt gebildet. Letzterer wird hier abweichend zur Ausgestaltung des Verfahrens 100 gemäß Figur 1 mit dem Stoffstrom 201 vereinigt. Wenngleich in Figur 2 gezeigt ist, dass in der Feintrennung 11 Packungen verwendet werden, kann die Feintrennung 11 auch unter Verwendung von Böden anstelle von Packungen durchgeführt werden.

Der Stoffstrom P wird der Feintrennung 11 insbesondere auf einem Druckniveau von 0,8 bis 1 bar (abs.), beispielsweise ca. 0,9 bar (abs.) und auf einem Temperaturniveau von 150 bis 160 °C, beispielsweise ca. 156 °C, zuge führt. Der Rücklauf 218 wird in der Feintrennung 11 insbesondere auf einem Druckniveau von 0,8 bis 1 bar (abs.), beispielsweise ca. 0,9 bar (abs.) und insbesondere auf einem Temperaturniveau von 60 bis 70 °C, beispielsweise ca. 66 bar (abs.) eing esetzt. Der Produktstrom S verlässt die Feintrennung 11 insbesondere auf einem Druckniveau von 0,9 bis 1,1 bar (abs.), beispielsweise ca. 1 bar (abs.) und auf einem Temperaturniveau von insbesondere 170 bis 180 °C, beispielsweise ca. 171 °C. Der Stoffstr om Q wird auf einem Druckniveau von 0,8 bis 1 bar (abs.), beispielsweise ca. 0,9 bar (abs.) und auf einem Temperaturniveau von 100 bis 110 °C, beispielsweise ca. 108 °C, aus der Feintrennung 11 ausgeführt.

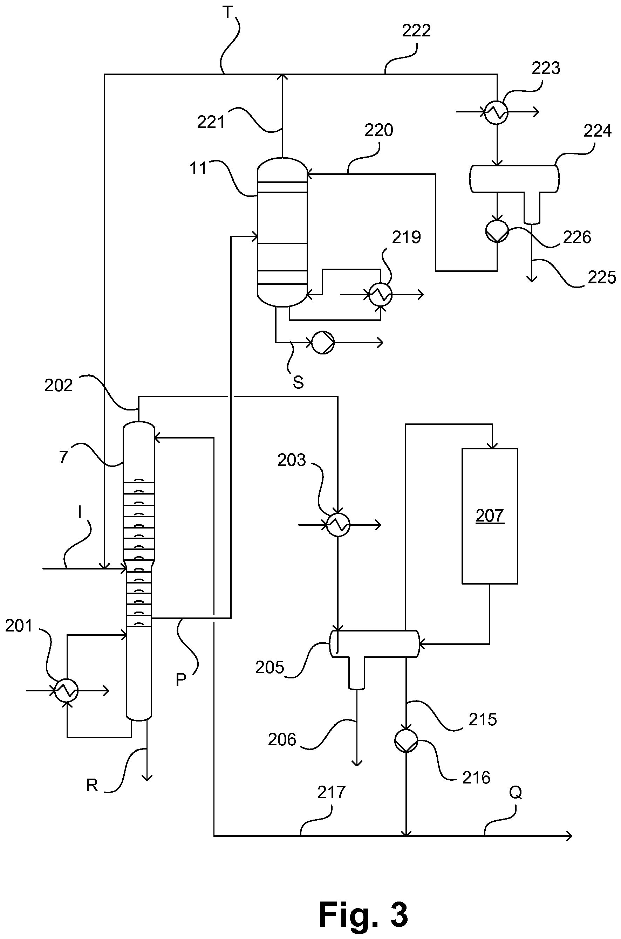

In Figur 3 sind Details des eines Verfahrens gemäß einer Ausführungsform der Erfindung, beispielsweise des in Figur 1 veranschaulichten Verfahrens 100 in einer abweichenden Ausgestaltung gegenüber Figur 2 dargestellt. Die Bezeichnung der jeweiligen Einrichtungen, Stoffströme und Fraktionen entspricht der Figur 1 und 2. Die in Figur 3 veranschaulichte Ausgestaltung kann auch in anderen Verfahren als dem in Figur 1 veranschaulichten Verfahren 100 zum Einsatz kommen.

Die in Figur 3 veranschaulichte Variante unterscheidet sich insbesondere in der Feintrennung 11, die hier unter Verwendung einer Bodenkolonne durchgeführt wird. Es sind nur wenige Böden zufällig ausgewählt veranschaulicht. Der Betrieb des auch hier mit 219 bezeichneten Sumpfverdampfers unterscheidet sich nicht von der Ausgestaltung gemäß Figur 2. Jedoch wird ein in der Feintrennung 11 verwendeter Rücklauf 220 nicht unter Verwendung des Stoffstroms 216 gebildet, sondern aus in der Feintrennung selbst gebildetem Kopfgas. Dieses Kopfgas wird in Form eines Stoffstroms 221 abgezogen.

Ein Teil des Stoffstroms 221 wird in Form des Stoffstroms T mit dem schweren Pyrolysebenzin I vereinigt und erneut der Vortrennung 7 zugeführt, um enthaltene Komponenten in die jeweils gewünschten Fraktionen zu überführen. Ein weiterer Teil wird in Form eines Stoffstroms 222 durch einen Wärmetauscher 223 geführt, abgekühlt und in einen Wasserabscheider 224 eingespeist. In diesem abgeschiedenes Wasser wird in Form eines Stoffstroms 225 abgezogen und beispielsweise mit dem Wasser des Stoffstroms 205 vereinigt. Mittels einer Pumpe 226 wird der Rücklauf 220 aus dem Wasserabscheider 224 zur Feintrennung zurückbefördert.

## Patentansprüche

1. Verfahren (100) zur Gewinnung polymerisierbarer aromatischer Verbindungen mit neun Kohlenstoffatomen (S), bei denm zumindest teilweise mittels Dampfspalten ein Komponentengemisch (B) gebildet wird, wobei das Komponentengemisch (B) wenigstens teilweise einer Aufbereitungssequenz (2, 3, 4, 5) umfassend eine Benzinentfernung (5) und danach, einer Verdichtung (8) und Fraktionierung (10) unterworfen wird, und wobei in der Benzinentfernung (5) und/oder während der Verdichtung (8) eine oder mehrere Pyrolysebenzinfraktionen (H, L) und in der Fraktionierung (10) eine oder mehrere weitere Pyrolysebenzinfraktionen (O) gebildet wird oder werden, **dadurch gekennzeichnet, dass** ein Trenneinsatz gebildet wird, der ausschließlich Pyrolysebenzin aus der oder zumindest einer der Pyrolysebenzinfraktionen (H, L) enthält, die in der Benzinentfernung (5) und/oder während der Verdichtung (8) gebildet wird oder werden, und frei von Pyrolysebenzin aus der einen oder den mehreren weiteren Pyrolysebenzinfraktionen (O) aus der Fraktionierung (10) ist, und dass der Trenneinsatz zumindest teilweise einer Trennung (7) unterworfen wird, wobei in der Trennung (7) zumindest eine erste Fraktion (P) gebildet wird, die gegenüber dem Trenneinsatz an aromatischen Verbindungen mit neun Kohlenstoffatomen angereichert ist.

2. Verfahren (100) nach Anspruch 1, bei dem die zumindest eine Fraktion (P), die in der Trennung (7) gebildet wird, wenigstens teilweise einer weiteren Trennung (11) als weiterer Trenneinsatz unterworfen wird, wobei in der weiteren Trennung (11) eine weitere Fraktion (S) gebildet wird, die gegenüber dem weiteren Trenneinsatz an aromatischen Verbindungen mit neun Kohlenstoffatomen angereichert ist.

3. Verfahren (100) nach einem der vorstehenden Ansprüche, bei dem die Aufbereitungssequenz (2, 3, 4, 5) eine Ölentfernung (3) umfasst, wobei eine Pyrolyseöl enthaltende (D) Fraktion in der Ölentfernung (3) gebildet wird, wobei aus der Pyrolyseöl enthaltenden (D) Fraktion in einer Ölstrippung (4) Komponenten ausgestrippt und in gasförmig in die Ölentfernung (3) zurückgeführt werden.

4. Verfahren (100) nach einem der vorstehenden Ansprüche, bei dem das Bilden der einen oder der mehreren Pyrolysebenzinfraktionen (H, L) in der Benzinentfernung (5) und/oder während der Verdichtung umfasst, eine oder mehrere Pyrolysebenzin enthaltende Fraktionen (H) zu bilden, und aus der einen oder den mehrere Pyrolysebenzin enthaltenden Fraktionen (H) in einer Benzinstrippung (6) Komponenten auszustrippen.

5. Verfahren (100) nach Anspruch 4, bei dem die oder die zumindest eine Pyrolysebenzinfraktion (H, L), , die in der Pyrolysebenzinentfernung (5) und/oder während der Verdichtung (8) gebildet wird oder werden, überwiegend oder ausschließlich aus der Benzinstrippung (6) abgezogen wird oder werden.

6. Verfahren (100) nach einem der vorstehenden Ansprüche, bei dem die Trennung (7) unter Verwendung einer Trennböden aufweisenden Trennkolonne durchgeführt wird, wobei eine Zwischenfraktion (P) der Trennkolonne über einen Seitenabzug gasförmig entnommen wird.

7. Verfahren (100) nach Anspruch 6, bei dem in der Trennung (7) ferner ein überwiegend oder ausschließlich Verbindungen mit mehr als neun Kohlenstoffatomen aufweisendes flüssiges Sumpfprodukt (R) und ein überwiegend oder ausschließlich Verbindungen mit weniger als neun Kohlenstoffatomen aufweisendes gasförmiges Kopfprodukt (202) gebildet werden.

8. Verfahren (100) nach Anspruch 7, wenn dieser von Anspruch 2 abhängt, bei dem die weitere Trennung (11) unter Verwendung einer Trennkolonne durchgeführt wird, in die in einem mittleren Bereich die Zwischenfraktion (P) eingespeist wird.

9. Verfahren (100) nach Anspruch 8, bei dem eine Produktfraktion (S) in der weiteren Trennung (11) als Sumpfprodukt gebildet wird, und bei dem in der weiteren Trennung (11) ferner ein Kopfprodukt gebildet wird.

10. Verfahren (100) nach Anspruch 9, bei dem die für die Trennung (7) und die für die weitere Trennung (11) verwendeten Trennkolonnen unter Verwendung von Sumpfverdampfern (201, 219) beheizt werden, in denen ein gemeinsames Heizmedium eingesetzt wird.

11. Verfahren (100) nach Anspruch 9 oder 10, bei dem in der Trennung (7) und in der weiteren Trennung (11) jeweils ein flüssiger Rücklauf verwendet wird.

12. Verfahren (100) nach Anspruch 11, bei dem der in der Trennung (7) und der in der weiteren Trennung (11) verwendete flüssige Rücklauf unter Verwendung zumindest eines Teils des Kopfprodukts der Trennung (7) gebildet wird, oder bei dem der in der Trennung (7) verwendete flüssige Rücklauf unter Verwendung zumindest eines Teils des Kopfprodukts der Trennung (7) gebildet wird, und bei dem der in der weiteren Trennung (11) verwendete flüssige Rücklauf unter Verwendung zumindest eines Teils der in der weiteren Trennung (11) gebildeten Kopfprodukts gebildet wird.

13. Verfahren (100) nach einem der vorstehenden Ansprüche, bei dem die Trennung (7) und die weitere Trennung (11) unter Vakuum durchgeführt werden.

## Claims

1. Method (100) for obtaining polymerizable aromatic compounds having nine carbon atoms (S), wherein a component mixture (B) is formed at least in part by means of steam cracking, wherein the component mixture (B) is subjected at least in part to a treatment sequence (2, 3, 4, 5) comprising a gasoline removal (5), and thereafter to a compaction (8) and fractionation (10), and wherein one or more pyrolysis gasoline fractions (H, L) are formed during gasoline removal (5) and/or during compaction (8) and one or more further pyrolysis gasoline fractions (O) are formed during fractionation (10), **characterized in that** a separation feed is formed which exclusively contains pyrolysis gasoline from the or at least one of the pyrolysis gasoline fractions (H, L) formed during gasoline removal (5) and/or during compaction (8) and which is free of pyrolysis gasoline from the one or more further pyrolysis gasoline fractions (O) from fractionation (10), **and in that** the separation feed is subjected at least in part to a separation (7), wherein at least one first fraction (P) is formed during separation (7) which, compared to the separation feed, is enriched in aromatic compounds having nine carbon atoms.

2. Method (100) according to claim 1, wherein the at least one fraction (P) formed during separation (7) is subjected at least in part to a further separation (11) as a further separation feed, wherein a further fraction (S) is formed during the further separation (11) which, compared to the further separation feed, is enriched in aromatic compounds having nine carbon atoms.

3. Method (100) according to any one of the preceding claims, wherein the treatment sequence (2, 3, 4, 5) comprises an oil removal (3), wherein a fraction containing pyrolysis oil (D) is formed during oil removal (3), wherein components are stripped from the fraction containing pyrolysis oil (D) during oil stripping (4) and are recycled in gaseous form to the oil removal (3).

4. Method (100) according to any one of the preceding claims, wherein the forming of the one or more pyrolysis gasoline fractions (H, L) during gasoline removal (5) and/or during compaction comprises forming one or more fractions (H) containing pyrolysis gasoline and stripping components from the one or more fractions (H) containing pyrolysis gasoline during gasoline stripping (6).

5. Method (100) according to claim 4, wherein the or the at least one pyrolysis gasoline fraction (H, L) formed during pyrolysis gasoline removal (5) and/or during compaction (8) is removed predominantly or exclusively from gasoline stripping (6).

6. Method (100) according to any one of the preceding claims, wherein the separation (7) is performed using a fractionation column having separation trays, wherein an intermediate fraction (P) of the fractionation column is withdrawn in gaseous form via a side draw.

7. Method (100) according to claim 6, wherein furthermore a liquid bottom product (R) comprising predominantly or exclusively compounds having more than nine carbon atoms and a gaseous top product (202) comprising predominantly or exclusively compounds having less than nine carbon atoms are formed during separation (7).

8. Method (100) according to claim 7, if the latter depends on claim 2, wherein the further separation (11) is performed using a fractionation column into which the intermediate fraction (P) is fed in a middle region.

9. Method (100) according to claim 8, wherein a product fraction (S) is formed as bottom product during further separation (11), and wherein a top product is formed furthermore during further separation (11).

10. Method (100) according to claim 9, wherein the fractionation columns used for separation (7) and for further separation (11) are heated using bottom evaporators (201, 219) in which a common heating medium is used.

11. Method (100) according to claim 9 or 10, wherein a liquid reflux is used both in the separation (7) and in the further separation (11).

12. Method (100) according to claim 11, wherein the liquid reflux used during separation (7) and during further separation (11) is formed using at least some of the top product of the separation (7), or wherein the liquid reflux used during separation (7) is formed using at least some of the top product of the separation (7), and wherein the liquid reflux used during further separation (11) is formed using at least some of the top product formed during further separation (11).

13. Method (100) according to any one of the preceding claims, wherein the separation (7) and the further separation (11) are performed under vacuum.

## Revendications

1. Procédé (100) permettant d'obtenir des composés aromatiques polymérisables comprenant neuf atomes de carbone (S), dans lequel un mélange de composants (B) est formé au moins partiellement par craquage à la vapeur, le mélange de composants (B) étant soumis au moins partiellement à une séquence de traitement (2, 3, 4, 5) comprenant une élimination d'essence (5), puis une compression (8) et un fractionnement (10) et une ou plusieurs fractions d'essence de pyrolyse (H, L) étant formées lors de l'élimination de l'essence (5) et/ou pendant la compression (8) et une ou plusieurs autres fractions d'essence de pyrolyse (O) étant formées lors du fractionnement (10), **caractérisé en ce qu'**une charge de séparation est formée, qui contient exclusivement de l'essence de pyrolyse provenant de la ou d'au moins l'une des fractions d'essence de pyrolyse (H, L) qui est/sont formée(s) lors de l'élimination d'essence (5) et/ou pendant la compression (8) et qui est exempte d'essence de pyrolyse provenant de ladite une ou desdites plusieurs autres fractions d'essence de pyrolyse (O) du fractionnement (10) **et en ce que** la charge de séparation est soumise au moins partiellement à au moins une séparation (7), au moins une première fraction (P) étant formée lors de la séparation (7), laquelle fraction est enrichie en composés aromatiques comprenant neuf atomes de carbone par rapport à la charge de séparation.

2. Procédé (100) selon la revendication 1, dans lequel ladite au moins une fraction (P) qui est formée lors de la séparation (7) est soumise au moins partiellement à une autre séparation (11) comme autre charge de séparation, une autre fraction (S) étant formée lors de l'autre séparation (11), laquelle fraction est enrichie en composés aromatiques comprenant neuf atomes de carbone par rapport à l'autre charge de séparation.

3. Procédé (100) selon l'une quelconque des revendications précédentes, dans lequel la séquence de traitement (2, 3, 4, 5) comprend une élimination d'huile (3), une fraction contenant de l'huile de pyrolyse (D) étant formée lors de l'élimination d'huile (3), des composants étant extraits de la fraction contenant de l'huile de pyrolyse (D) lors d'une extraction d'huile (4) et étant recyclés sous forme gazeuse lors de l'élimination d'huile (3).

4. Procédé (100) selon l'une quelconque des revendications précédentes, dans lequel la formation de ladite une ou desdites plusieurs fractions d'essence de pyrolyse (H, L) lors de l'élimination d'essence (5) et/ou pendant la compression comprend la formation d'une ou de plusieurs fractions (H) contenant de l'essence de pyrolyse et l'extraction de composants à partir de ladite une ou desdites plusieurs fractions contenant de l'essence de pyrolyse (H) lors d'une extraction d'essence (6).

5. Procédé (100) selon la revendication 4, dans lequel ladite ou ladite au moins une fraction d'essence de pyrolyse (H, L) qui est formée lors de l'élimination d'essence de pyrolyse (5) et/ou pendant la compression (8) est soutirée principalement ou exclusivement de l'extraction d'essence (6).

6. Procédé (100) selon l'une quelconque des revendications précédentes, dans lequel la séparation (7) est réalisée à l'aide d'une colonne de séparation présentant des plateaux de séparation, une fraction intermédiaire (P) étant soutirée sous forme gazeuse de la colonne de séparation par l'intermédiaire d'un soutirage latéral.

7. Procédé (100) selon la revendication 6, dans lequel on forme en outre lors de la séparation (7) un produit de fond liquide (R) présentant principalement ou exclusivement des composés comprenant plus de neuf atomes de carbone et un produit de tête gazeux (202) présentant principalement ou exclusivement des composés comprenant moins de neuf atomes de carbone.

8. Procédé (100) selon la revendication 7, lorsque celle-ci dépend de la revendication 2, dans lequel l'autre séparation (11) est réalisée à l'aide d'une colonne de séparation dans laquelle la fraction intermédiaire (P) est injectée dans une zone centrale.

9. Procédé (100) selon la revendication 8, dans lequel une fraction de produit (S) est formée comme produit de fond lors de l'autre séparation (11) et dans lequel un produit de tête est en outre formé lors de l'autre séparation (11).

10. Procédé (100) selon la revendication 9, dans lequel les colonnes de séparation utilisées pour la séparation (7) et l'autre séparation (11) sont chauffées à l'aide d'évaporateurs de fond (201, 219) dans lesquels un milieu chauffant commun est utilisé.

11. Procédé (100) selon la revendication 9 ou 10, dans lequel on utilise à chaque fois un reflux liquide lors de la séparation (7) et lors de l'autre séparation (11).

12. Procédé (100) selon la revendication 11, dans lequel le reflux liquide utilisé lors de la séparation (7) et lors de l'autre séparation (11) est formé à l'aide d'au moins une partie du produit de tête de la séparation (7) ou dans lequel le reflux liquide utilisé lors de la séparation (7) est formé à l'aide d'au moins une partie du produit de tête de la séparation (7) et dans lequel le reflux liquide utilisé lors de l'autre séparation (11) est formé à l'aide d'au moins une partie du produit de tête formé lors de l'autre séparation (11).

13. Procédé (100) selon l'une quelconque des revendications précédentes, dans lequel la séparation (7) et l'autre séparation (11) sont réalisées sous vide.
